# EUROPÄISCHE PATENTSCHRIFT

(11) **EP 0 525 669 B1**
(45) Veröffentlichungstag und Bekanntmachung des Hinweises auf die Patenterteilung: **29.11.1995**
(21) Anmeldenummer: 92112688.4
(22) Anmeldetag: 24.07.1992
(51) Int. Cl.: C08F 14/06, C08F 2/44, C08F 2/22, C08F 2/38

(54) **Verfahren zur Herstellung eines Vinylchloridpolymerisates**
Process for making a vinyl chloride polymer
Procédé de fabrication d'un polymère de chlorure de vinyle

(30) Priorität: 27.07.1991 DE 4124962
(43) Veröffentlichungstag der Anmeldung: 03.02.1993
(73) Patentinhaber: HOECHST AKTIENGESELLSCHAFT, 65926 Frankfurt am Main (DE)
(72) Erfinder: Hohenadel, Robert, Dr., W-8269 Brugkirchen (DE)
(74) Vertreter: Schuderer, Michael

(56) Entgegenhaltungen:
- DE-A- 1 083 550
- FR-A- 950 423
- FR-A- 2 294 189
- JP-A- 057 060
- DATABASE CHEMICAL ABSTRACTS (HOST: STN): CA88(16): 106 286e, Colombus, Ohio, US;
- Chemical Abstract 87: 20240 8y

## Beschreibung

Die Erfindung betrifft ein Verfahren zur Herstellung eines Vinylchloridpolymerisates durch Polymerisation in wäßriger Emulsion, wobei im Zeitraum von vor Beginn der Polymerisation bis vor dem Beginn der Trocknung dem Polymerisationsansatz 0,01 bis 2 Gew.-%, bezogen auf Monomer(e), wasserlösliche Kieselsäure und/oder ein wasserlösliches Salz einer Kieselsäure zugegeben werden. Die Angabe "wasserlöslich" für die Kieselsäuren und deren Salze ist hierbei stets als "kolloidal oder molekular wasserlöslich" zu verstehen. Die Erfindung betrifft ferner eine Formmasse, die ein wie oben beschrieben hergestelltes Vinylchloridpolymerisat enthält, und die Verwendung eines solchen Vinylchloridpolymerisates zur Herstellung von festen Schaumstoffen.

Aus der DE-A 25 57 788 ist die Polymerisation von Vinylchlorid in einem Reaktor bekannt, dessen Innenflächen mit einem Farbstoff und wenigstens einer Verbindung aus der Gruppe der Hydroxide, Oxide, Halogenide oder Carboxylate beliebiger Metalle, der Oxosäuren der zur zweiten bis sechsten Periode der Gruppen IIB und III bis VII des Periodensystems gehörenden Elemente und der Salze dieser Oxosäuren beschichtet worden sind. Unter einer Vielzahl möglicher Verbindungen ist Kieselsäure und als Salze sind Alkalisalze genannt. Nach den Beispielen werden die Beschichtungen in Lösung aufgetragen, getrocknet und mit Wasser gewaschen, bevor mit der Polymerisation begonnen wird. Zusätzlich zu der Beschichtung soll es ferner nützlich sein, der Polymerisationsmischung eine Lösung oder Dispersion eines Farbstoffes oder einer der obengenannten Verbindungen oder eines Gemisches beider zuzusetzen. Dieser Zusatz soll auf den Bereich von einigen ppm bis 100 ppm, bezogen auf Monomere, begrenzt werden, da sonst nachteilige Auswirkungen auf das Polymere auftreten können. Das beschriebene Verfahren dient der Verhinderung von Wandbelägen während der Polymerisation.

In der JP-A 53-014789 (= JP 78/14789; C.A. 89/7044p) wird die Suspensionspolymerisation von Vinylchlorid in Gegenwart von 1 bis 1000 ppm kolloidalem SiO₂ beschrieben. Im Beispiel werden 5 ppm SiO₂, bezogen auf monomeres Vinylchlorid, eingesetzt. Ähnlich der Lehre der zuvor genannten Schrift soll hierdurch die Wandbelagsbildung im Reaktor vermindert werden.

Ebenfalls zur Herabsetzung von Reaktorwandbelägen beschreibt die GB-A 1 513 152 die Suspensionspolymerisation von Vinylchlorid in Gegenwart von 0,1 bis 1,0 % keramischer Teilchen der Dichte 1,5 bis 3. Im Beispiel werden 0,5 Teile poröse Tonteilchen auf 100 Teile Monomer eingesetzt.

Ferner sind aus der CS-A 220 636 (C.A. 104; 225831n) Pasten bekannt, die gute Sedimentations-Stabilität zeigen und die eine Hauptmenge eines Emulsionspolyvinylchlorids oder eines Vinylchlorid-Vinylacetat-Copolymeren, 2 bis 25 % Suspensionspolyvinylchlorid, 0,05 bis 5 % SiO₂, Aluminiumsilicat oder Magnesiumsilicat und/oder Aluminiumstearat und 0,1 bis 5 % eines oligomeren, höheren Glykols enthalten. Die Pasten werden offenbar durch Zusammenmischen der Polymerpulver mit den Zusatzstoffen erhalten.

Der Einsatz von pyrogener, nicht wasserlöslicher Kieselsäure als Verdickungsmittel, beispielsweise zur Regulierung der Viskosität von Pasten auf Basis von Polyvinylchlorid, ist ebenfalls bekannt. Die Kieselsäure wird hierbei zusammen mit dem bereits getrockneten Polymeren verwendet.

In keiner der genannten Schriften ist etwas über vorteilhafte Wirkungen von Kieselsäure beziehungsweise SiO₂-Zusätzen auf die Schaumstruktur von Polyvinylchloridschäumen ausgesagt. Zusätze von über 100 ppm, bezogen auf Monomere, werden - wie vorstehend ausgeführt - in der DE-A 25 57 788 als nachteilig beschrieben.

In der FR-A 950 423 wird ein Verfahren zur Polymerisation von Vinylchlorid beschrieben, bei dem zur wäßrigen Emulsion des Vinylchloridmonomeren,vor oder während der Polymerisation,eine wäßrige Dispersion von wasserunlöslichen Silikaten von Calcium, Barium, Strontium, Blei oder Silber zugegeben wird.

Es wurde nun ein Verfahren gefunden, das es ermöglicht, Vinylchlorid-Emulsionspolymerisate herzustellen, die bei der Herstellung von festen Schaumstoffen verbesserte Aufschäumgeschwindigkeit, Zellstruktur und geringere Wasserempfindlichkeit ergeben.

Das neue Verfahren betrifft insbesondere die Herstellung eines Vinylchloridpolymerisates durch Polymerisation von Vinylchlorid oder einer Mischung von Vinylchlorid und 0,1 bis 30 Gew.-%, bezogen auf die Mischung, von mindestens einem Monomeren, das mit Vinylchlorid copolymerisierbar ist, oder einer Mischung von Vinylchlorid und 0,2 bis 10 Gew.-%, bezogen auf die Mischung, von mindestens einem Polymeren, das mit Vinylchlorid pfropfpolymerisierbar ist, in wäßriger Emulsion in Gegenwart mindestens eines wasserlöslichen Emulgators, mindestens eines wasserlöslichen, radikalbildenden Initiators und, wenn nützlich, weiterer für die Emulsionspolymerisation von Vinylchlorid üblicher Hilfsstoffe bei 10 bis 90 °C unter Rühren, falls erforderlich Aufkonzentrieren der erzeugten Polymerisatdispersion, und Trocknen zum Vinylchloridpolymerisat-Pulver, wobei im Zeitraum von vor Beginn der Polymerisation bis vor dem Beginn der Trocknung dem Polymerisationsansatz die wasserlösliche Kieselsäure und/oder mindestens ein wasserlösliches Salz einer Kieselsäure zugegeben werden.

Unter "wasserlöslicher Kieselsäure" sind im wesentlichen Verbindungen des Typs SiO₂ · xH₂O zu verstehen, in denen x Werte von 2 bis nahezu Null erreichen kann. Einzelne Vertreter solcher Verbindungen sind beispielsweise Orthokieselsäure, Metakieselsäure oder Dikieselsäure. Wenn x Werte von 1 bis nahezu Null hat, liegen die Verbindungen in oligomerer oder polymerer Form vor. Geeignete Verbindungen werden auch als "Kieselsole" bezeichnet. Die wasserlöslichen Kieselsäuren beziehungsweise Kieselsole können geringe Mengen anorganischer Substituenten wie Chlor, Fluor oder Brom sowie organische Substituenten wie Alkoxygruppen mit 1 bis 4 C-Atomen enthalten. Sie werden vorteilhaft als wäßriges Kolloid (beziehungsweise Sol) eingesetzt. Den wäßrigen kolloidalen Lösungen können wassermischbare Lösungsmittel wie Alkohole, niedrige Ketone, Glykole oder Glykolether zugegeben werden. Der Einsatz von kolloidalen Lösungen in organischen Lösungsmitteln (als sogenannter "Organosole") ist ebenfalls möglich, jedoch im allgemeinen nicht erforderlich.

Entweder anstelle der freien Säuren oder in Kombination mit diesen können die wasserlöslichen Salze dieser Säuren, vorzugsweise die Alkalisalze, verwendet werden. Wegen ihrer leichten Zugänglichkeit und guten Wirkung sind Natron- oder Kali-Wassergläser sowie Natrium- oder Kaliummetasilicate besonders bevorzugt. Auch die Salze der Kieselsäure können im kolloidalen Sol-Zustand in Wasser gelöst vorliegen.

"Wasserlöslich" heißt im engeren Sinne, daß in 100 g Wasser bei 20 °C mindestens 1 g der wasserfreien Kieselsäure beziehungsweise deren Salz kolloidal oder molekular löslich sein sollen.

Erfindungsgemäß werden im Zeitraum von vor dem Beginn der Polymerisation bis vor dem Beginn der Trocknung 0,01 bis 2 Gew.-%, bezogen auf das oder die bei der Polymerisation verwendete(n) Monomere(n), von der wasserlöslichen Kieselsäure und/oder mindestens einem wasserlöslichen Salz einer Kieselsäure eingesetzt. Unter 0,01 Gew.-% ist die Wirkung des Zusatzes im allgemeinen zu gering, bei Zusätzen über 2 Gew.-% kann eine Verschlechterung der Verschäumbarkeit eintreten. Vorzugsweise werden 0,011 bis 0,8 Gew.-% eingesetzt. Insbesondere werden 0,015 bis 0,4 Gew.-% eingesetzt.

Die Herstellung von wasserlöslichen Kieselsäuren, auch "Kieselsole" genannt, ist beispielsweise beschrieben in "Gmelins Handbuch der anorganischen Chemie", 8. Auflage, Band 15, Teil B, Seiten 408 bis 435 und 456 bis 457. Teilweise sind solche Kieselsäuren wie auch deren wasserlöslichen Salze Marktprodukte.

Die wasserlöslichen Kieselsäuren beziehungsweise wasserlöslichen Salze einer Kieselsäure können dem Polymerisationsansatz vor der Polymerisation sowie auch während der Polymerisation zugegeben werden. Der Zusatz kann auf einmal, portionsweise oder kontinuierlich erfolgen. Das gleiche gilt für den Zusatz nach Beendigung der Polymerisation. In einer bevorzugten Ausführungsform wird ein Teil der kolloidal wasserlöslichen Kieselsäure und/oder des Salzes einer Kieselsäure vor Beginn oder während der Polymerisation und der Rest der zuzugebenden Gesamtmenge nach der Polymerisation der Polymerisatdispersion zugegeben.

Das erfindungsgemäße Verfahren eignet sich für die Homo-, Co- und Pfropfpolymerisation von Vinylchlorid in wäßriger Emulsion. Die Polymerisation wird vorteilhaft bei 20 bis 80 °C und insbesondere bei 30 bis 75 °C, ausgeführt, wobei vorzugsweise unter dem autogenen Druck der Reaktionsmischung gearbeitet wird.

Zur Copolymerisation mit einer Mischung von Vinylchlorid mit mindestens einem anderen Monomeren können vorzugsweise 3 bis 15 Gew.-%, bezogen auf die Mischung, beispielsweise eines oder mehrerer folgender Monomerer verwendet werden: Olefine wie Ethylen oder Propylen, Vinylester von geradkettigen oder verzweigten Carbonsäuren mit 2 bis 20 Kohlenstoffatomen, vorzugsweise 2 bis 4 Kohlenstoffatomen, wie Vinylacetat, -propionat, -butyrat, -2-ethylhexoat oder Vinylisotridecansäureester, von Vinylchlorid verschiedene Vinylhalogenide wie Vinylfluorid, Vinylidenfluorid oder Vinylidenchlorid, Vinylether, Vinylpyridin, ungesättigte Säuren wie Malein-, Fumar-, Acryl- oder Methacrylsäure und deren Mono- oder Diester mit Mono- oder Dialkoholen mit 1 bis 10 Kohlenstoffatomen, Maleinsäureanhydrid, Maleinsäureimid sowie dessen N-Substitutionsprodukte mit aromatischen, cycloaliphatischen sowie gegebenenfalls verzweigten aliphatischen Substituenten, Acrylnitril oder Styrol.

Zur Pfropfpolymerisation können in Mischung mit Vinylchlorid in einer Menge von vorzugsweise 0,5 bis 7 Gew.-%, bezogen auf die Mischung, beispielsweise elastomere Polymerisate verwendet werden, die durch Polymerisation von einem oder mehreren folgender Monomerer erhalten wurden: Diene wie Butadien oder Cyclopentadien, Olefine wie Ethylen oder Propylen, Styrol, ungesättigte Säuren wie Acryl- oder Methacrylsäure sowie deren Ester mit Mono- oder Dialkoholen mit 1 bis 10 Kohlenstoffatomen, Acrylnitril, Vinylverbindungen wie Vinylester von geradkettigen oder verzweigten Carbonsäuren mit 2 bis 20 Kohlenstoffatomen, vorzugsweise 2 bis 4 Kohlenstoffatomen, Vinylhalogenide wie Vinylidenchlorid oder Vinylchlorid, letzteres nur in Mischung mit mindestens einem der vorgenannten Monomeren.

Die Polymerisation erfolgt in Gegenwart mindestens eines wasserlöslichen radikalbildenden Initiators, von dem zweckmäßig 0,001 bis 1 Gew.-%, vorzugsweise 0,01 bis 0,3 Gew.-%, bezogen auf eingesetzte(s) Monomer(e), verwendet werden. Geeignete Initiatoren sind beispielsweise Persulfate wie Kalium-, Natrium- oder Ammoniumpersulfat, Wasserstoffperoxid, tert.-Butylhydroperoxid, Peroxophosphate oder andere wasserlösliche Peroxide sowie auch Mischungen verschiedener Katalysatoren, wobei diese Katalysatoren auch in Gegenwart von 0,01 bis 1 Gew.-%, vorzugsweise 0,05 bis 0,5 Gew.-%, bezogen auf eingesetzte(s) Monomer(e), einer oder mehrerer reduzierender Substanzen, die zum Aufbau eines Redox-Katalysatorsystems geeignet sind, wie zum Beispiel Sulfite, Bisulfite, Dithionite, Thiosulfate oder Aldehydsulfoxylate, zum Beispiel Formaldehydsulfoxylat, eingesetzt werden können. Gegebenenfalls kann die Polymerisation in Gegenwart von 0,01 bis 10 Gew.-Teilen Metallionen je 1 000 000 Gew.-Teile eingesetzte Monomere von löslichen Metallsalzen, beispielsweise des Kupfers, Silbers, Eisens, Nickels, Kobalts oder Chroms, vorgenommen werden.

Als wasserlösliche Emulgatoren können 0,01 bis 4 Gew.-%, vorzugsweise 0,5 bis 3 Gew.-% und insbesondere 1 bis 2,5 Gew.-%, bezogen auf eingesetzte(s) Monomer(e), von anionischen, amphoteren, kationischen sowie nicht ionogenen Emulgatoren verwendet werden. Als anionische Emulgatoren sind beispielsweise geeignet: Alkali-, Erdalkali- oder Ammoniumsalze von Fettsäuren wie Laurin-, Palmitin- oder Stearinsäure, von sauren Fettalkoholschwefelsäureestern, von Paraffinsulfosäuren, von Alkylarylsulfosäuren wie Dodecylbenzol- oder Dibutylnaphthalinsulfosäure, von Sulfobernsteinsäuredialkylestern sowie Alkali- und Ammoniumsalzen von epoxygruppenhaltigen Fettsäuren wie Epoxystearinsäure oder von ungesättigten Fettsäuren wie Öl- oder Linolsäure oder ungesättigten Oxyfettsäuren wie Rhizinolsäure. Als amphotere beziehungsweise kationenaktive Emulgatoren sind beispielsweise geeignet: Alkylbetaine wie Dodecylbetain sowie Alkylpyridiniumsalze wie Laurylpyridiniumhydrochlorid, ferner Alkylammoniumsalze wie Oxethyldodecylammoniumchlorid. Als nicht ionogene Emulgatoren sind beispielsweise geeignet: Teilfettsäureester mehrwertiger Alkohole wie Glycerinmonostearat, Sorbitmonolaurat, -oleat oder -palmitat, Polyoxyethylenether von Fettalkoholen oder aromatischen Hydroxyverbindungen, Polyoxyethylenester von Fettsäuren sowie polypropylenoxid-Polyethylenoxid-Kondensationsprodukte. Bevorzugt wird mindestens ein Emulgator eingesetzt, der ausgewählt ist aus den Natrium- oder Kaliumsalzen der Alkylsulfonsäuren, die 8 bis 18 C-Atome enthalten, der Alkylsulfate, die 8 bis 18 C-Atome enthalten, sowie der Sulfobernsteinsäuremono- oder -diester mit aliphatischen Alkoholen, die 8 bis 12 C-Atome enthalten.

Neben Katalysatoren und Emulgatoren kann die Polymerisation in Gegenwart von Puffersubstanzen, beispielsweise Alkaliacetate, Borax, Alkaliphosphate, Alkalicarbonate, Ammoniak- oder Ammoniumsalzen von Carbonsäuren sowie von Molekülgrößenreglern, wie beispielsweise aliphatische Aldehyde mit 2 bis 4 C-Atomen, Halogenkohlenwasserstoffe, wie zum Beispiel Di- und Trichlorethylen, Chloroform, Bromoform, Methylenchlorid oder Mercaptane, durchgeführt werden.

Weitere für die Polymerisation geeignete Zusatzstoffe sind aufgeführt in H. Kainer "Polyvinylchlorid und Vinylchlorid-Mischpolymerisate", Auflage 1965, Seiten 13 bis 59.

Die Polymerisation kann sowohl kontinuierlich wie auch absatzweise (chargenweise) durchgeführt werden, falls erforderlich wird ein Saat-Vorpolymerisat verwendet. Es wird bis zu einem Umsatz von 74 bis 95 %, vorzugsweise 85 bis 92 %, bezogen auf eingesetztes monomeres Vinylchlorid, polymerisiert, wobei der Ansatz durch Rühren oder andere geeignete Maßnahmen in Bewegung gehalten wird. Die Rührintensität kann während der Polymerisation verändert werden.

Nach Erreichen des gewünschten Umsatzes wird die Polymerisationsmischung entspannt, falls erforderlich zur Entfernung von restlichen nicht umgesetzten Monomeren nachbehandelt und anschließend, beispielsweise durch Versprühen, getrocknet. Vor dem Versprühen kann die Polymerisationsmischung, beispielsweise durch Ultrafiltration, aufkonzentriert werden.

Das getrocknete Polymerpulver kann nach üblichen Verfahren unter Beimischung von Fabrikationshilfsstoffen wie Wärmestabilisatoren, Gleitmittel, Weichmachern, Füllstoffen, Pigmenten, Antistatika oder Lichtstabilisatoren vermittels thermoplastischer Verformung durch Granulieren, Kalandrieren, Extrudieren, Pressen, Spritzgießen, Sintern, Beschichten und Gelieren zu Halbzeugen und Formköpern verschiedenster Art verarbeitet werden. Besonders vorteilhaft ist die Verwendung des erfindungsgemäß hergestellten Vinylchloridpolymerisates zur Produktion von Formteilen aus einem festen Polymerschaum, der im Polymeranteil überwiegend polymerisierte Einheiten des Vinylchlorids enthält.

Gegenstand der Erfindung ist auch eine Formmasse, die enthält:
a₁) 50 bis 100 Gew.-Teile eines Vinylchloridpolymeren, das in wäßriger Emulsion nach einem oder mehreren der Ansprüche 1 bis 5 polymerisiert wurde und 0,0105 bis 2,7 Gew.-%, bezogen auf das Polymere, wasserlösliche Kieselsäure und/oder mindestens ein wasserlösliches Salz einer Kieselsäure enthält,
a₂) 0 bis 50 Gew.-Teile eines durch Polymerisation in wäßriger Suspension hergestellten Vinylchloridpolymeren, das eine mittlere Teilchengröße von 20 bis 60 »m aufweist, mit der Maßgabe, daß a₁) und a₂) zusammen 100 Gew.-Teile sind,
b) 30 bis 130 Gew.-Teile mindestens eines Weichmachers, vorzugsweise ausgewählt aus den Estern der Phosphorsäure, Trimellithsäure, einer Phthalsäure, einer Alkylsulfonsäure oder einer aliphatischen Di- oder Tricarbonsäure mit einwertigen Alkoholen oder einwertigen Phenolen, die 4 bis 13 C-Atome enthalten, Chlorparaffinen, Epoxidgruppen enthaltenden Carbonsäuretriglyceriden oder oligomeren Polyesterweichmachern,
c) 0,1 bis 15 Gew.-Teile von mindestens einem chemisch zersetzlichen Treibmittel, das mindestens 2 N-Atome im Molekül enthält,
d₁) 0 bis 10 Gew.-Teile mindestens einer als "Kicker" wirksamen Verbindung, die die Zersetzungstemperatur des Treibmittels herabsetzt, und
d₂) 0 bis 10 Gew.-Teile eines für Vinylchloridpolymerisate geeigneten Thermostabilisators, mit der Maßgabe, daß d₁) und d₂) zusammen mindestens 0,2 Gew.-Teile sind.

Die Komponente a₁) der Formmasse besteht vorzugsweise aus einem Vinylchloridpolymeren, das in wäßriger Emulsion nach einem oder mehreren der Ansprüche 1 bis 5 polymerisiert wurde und 0,0115 bis 1,08 Gew.-%, insbesondere 0,0158 bis 0,54 Gew.-%, bezogen auf das Polymere, wasserlösliche Kieselsäure und/oder ein wasserlösliches Salz einer Kieselsäure enthält.

Als Weichmacher sind beispielsweise geeignet:
Di-2-ethylhexylphthalat, Diisononylphthalat, Diisodecylphthalat, Dibutylphthalat, Butylbenzylphthalat sowie ein Gemisch aus Phthalsäureestern mit einwertigen aliphatischen Alkoholen, die 9 bis 11 C-Atome aufweisen, Diphenyloctylphosphat, Diphenyldecylphosphat, Diphenylkresylphosphat, Trikresylphosphat, Trioctylphosphat, Diheptyladipat, Di-2-ethylhexyladipat, Dinonyladipat, Diisooctyladipat, Diisodecyladipat, Di-2-ethylhexylacelat, Diisooctylacelat, Di-2-ethylhexylsebacat, Diisooctylsebacat, Tri-2-ethylhexyltrimellithat, Mischungen von Estern der Trimellithsäure mit C₆- bis C₁₀-Alfolalkoholen, Triisooctyltrimellithat, Alkylsulfonsäureester des Phenols oder Kresols, chlorierte Paraffine, epoxidiertes Sojabohnenöl, epoxidiertes Leinöl, Diisodecyltetrahydro-4,5-epoxyphthalat oder Polyesterweichmacher. Weitere geeignete Weichmacher sind in dem von Hans K. Felger herausgegebenen "Kunststoffhandbuch", Band 2, 'Polyvinylchlorid' (1985), Carl-Hanser-Verlag München/Wien, Seiten 622 bis 641 beschrieben. Vorteilhaft werden 40 bis 120 Gew.-Teile und insbesondere 60 bis 100 Gew.-Teile als Komponente b) in der erfindungsgemäßen Formmasse eingesetzt.

Beispiele für geeignete chemisch zersetzliche Treibmittel sind Azoverbindungen, Hydrazine, Semicarbazide, Triazole, Tetrazole, N-Nitrosoverbindungen und Benzoxazine. Geeignete Verbindungen sind beschrieben in "Kunststoffe" 66 (1976), Heft 10, Seiten 699 und 700. Vorteilhaft werden solche Treibmittel eingesetzt, die einen Zersetzungsbereich von 155 bis 220 °C in Luft aufweisen, beispielsweise Azodicarbonamid. Vorteilhaft enthält die erfindungsgemäße Formmasse als Komponente c) 0,5 bis 5 Gew.-Teile und insbesondere 0,7 bis 2 Gew.-Teile mindestens eines chemisch zersetzlichen Treibmittels.

Für Vinylchloridpolymerisate geeignete Thermostabilisatoren, die teilweise gleichzeitig als Lichtstabilisatoren wirken, sind beispielsweise Organozinnmercaptide und -sulfide, Organozinncarboxylate, Barium/Cadmium-, Barium/Zink- und Calcium/Zink-Stabilisatoren, die häufig Carboxylatgruppen enthalten, Bleistabilisatoren wie basische Bleisalze oder längerkettige Bleicarboxylate, Aminocrotonsäureester, Phenylindole oder Harnstoffderivate. Diese primären Stabilisatoren können zusammen mit Co-Stabilisatoren, beispielsweise organischen Phosphiten, oder Epoxyverbindungen oder Polyolen eingesetzt werden. Solche Thermostabilisatoren und Co-Stabilisatoren sind beispielsweise beschrieben bei Hans K. Felger, loc. cit. Seiten 527 bis 550.

Als "Kicker", das heißt als Verbindungen, die die Zersetzungstemperatur des verwendeten Treibmittels herabsetzen, sind beispielsweise geeignet Verbindungen der Metalle Calcium, Barium, Zink, Zinn oder Blei, die häufig organische Reste über Sauerstoff oder über Schwefel oder direkt am Metall gebunden enthalten. Auch rein anorganische Verbindungen können als "Kicker" geeignet sein, wobei häufig Kombinationen mehrerer Verbindungen, beispielsweise Calcium/Zink, Barium/Zink, Kalium/Zink oder Blei/Zink angewendet werden. Solche "Kicker" sind häufig auch Thermostabilisatoren beziehungsweise umgekehrt können übliche Thermostabilisatoren für Vinylchloridpolymerisate als "Kicker" dienen. Vorzugsweise soll die Menge der in der erfindungsgemäßen Formmasse als Komponenten d₁) und d₂) eingesetzten "Kicker" und Thermostabilisatoren zusammen 0,5 bis 10 Gew.-Teile und insbesondere 1 bis 3 Gew.-% betragen.

Neben den weiter oben genannten Komponenten a) bis d) kann die Formmasse noch folgende weitere Bestandteile beziehungsweise Additive enthalten: Füllstoffe wie Calciumcarbonat, Bariumsulfat, Aluminiumhydroxid oder Ruß. Weitere geeignete Füllstoffe sind genannt bei Hans K. Felger, loc. cit. Seiten 667 bis 671.

Als Pigmente beziehungsweise Farbstoffe geeignete Verbindungen sind genannt bei Hans K. Felger, loc. cit. Seiten 681 bis 682 und 686 bis 689, ferner Flammschutzmittel, siehe Hans K. Felger, loc. cit. Seiten 736, 737, 741 bis 744, weiterhin Antistatika, siehe Hans K. Felger, loc. cit. Seiten 729 bis 732. Als weitere Zusatzstoffe kommen in Frage Viskositätsregler, Verdünnungsmittel, UV-Stabilisatoren, Fungicide, Dispergierhilfsstoffe und Entgasungshilfsstoffe.

Die Formmassen werden durch Zusammenmischen der einzelnen Komponenten hergestellt und durch thermische Behandlung zu formstabilen Teilen verarbeitet, die in Abhängigkeit vom Weichmachergehalt mehr oder weniger große Flexibilität aufweisen. Geeignete Verfahren sind beispielsweise beschrieben bei Hans K. Felger, loc. cit. Seiten 854 bis 869.

Wie eingangs erwähnt, eignet sich das nach dem erfindungsgemäßen Verfahren hergestellte Polymerisat wie auch die erfindungsgemäße Formmasse zur Herstellung von Polymerschaumstoffen, die verbesserte Aufschäumgeschwindigkeit sowie gleichmäßigere Zellstruktur bei geringerer Wasserempfindlichkeit aufweisen. Das erfindungsgemäß erzeugte Polymere eignet sich auch für weitere Anwendungen.

Nachfolgende Beispiele und Vergleichsversuche sollen die Erfindung näher erläutern.

Zur Emulsionspolymerisation wird ein senkrecht stehender zylindrischer Polymerisationskessel mit 1,5 m³ Inhalt verwendet, der mit einem von einer Temperierflüssigkeit durchflossenen Doppelmantel, einem Blattrührer, einer im oberen Drittel und einer im unteren Drittel angebrachten Zu- beziehungsweise Abführung von Flüssigkeit sowie einer Zu- beziehungsweise Abführung von Gas am Behälterdeckel und einer Standhöhenmessung und -regelung, die den Flüssigkeitsaustrag regelt, ausgestattet ist.

### Vergleichsversuche A und B sowie Beispiel 1

In den Polymerisationskessel werden eingetragen:
77 l/h einer wäßrigen Lösung (Emulgatorlösung), die enthält (jeweils bezogen auf die Lösung):
1,08 Gew.-% Natriumsalz eines C₁₂ bis C₁₄-Alkansulfats,
0,36 Gew.-% Natriumsalz des Sulfobernsteinsäurediisodecylesters und
0,015 Gew.-% Natriumhydrogensulfit als Coaktivator.

Die wäßrige Lösung enthält ferner:
- für Vergleichsversuch A
   0,07 Gew.-% Natriumhydrogencarbonat und
   0,1 Gew.-% sekundäres Natriumphosphat
- für Vergleichsversuch B
   0,02 Gew.-% tertiäres Natriumphosphat
- für Beispiel 1
   0,02 Gew.-% Natron-Wasserglas.

Ferner werden eingetragen:
70 l/h monomeres Vinylchlorid und
2 l/h einer 2gew.%igen Lösung von Kaliumpersulfat in Wasser.

Die Mischung aus wäßriger Emulgatorlösung, Vinylchlorid und wäßriger Kaliumpersulfatlösung wird kontinuierlich in den Polymerisationskessel so eingetragen, daß eine mittlere Verweilzeit von etwa 10 Stunden erzielt wird. Die Temperatur im Polymerisationskessel beträgt 50 °C. Die aus dem Polymerisationskessel ausgetragene Polymerisatdispersion hat einen Feststoffgehalt von etwa 43 Gew.-%. Der Umsatz an monomerem Vinylchlorid beträgt 90 %. Die Polymerisatdispersion wird in einen Behälter übergeführt, dort entspannt und während 4 Stunden bei 65 °C evakuiert, wobei sich ein Enddruck von etwa 25 kPa (0,25 bar) einstellt. Nach Ablauf der 4 Stunden werden der Polymerisatdispersion zugesetzt, jeweils bezogen auf Polymeres in der Dispersion:
- für Vergleichsversuch A
   0,2 Gew.-% Natriumcarbonat
- für Vergleichsversuch B
   0,2 Gew.-% Trinatriumphosphat
- für Beispiel 1
   0,2 Gew.-% Natron-Wasserglas.

Die Dispersion wird nun in einem Sprühtrockner mit einer Eingangstemperatur von 160 °C und einer Ausgangstemperatur von 60 °C getrocknet. Das trockene Emulsionsvinylchlorid-Polymerisat hat einen K-Wert von 69. Die aus den Vergleichsversuchen und dem Beispiel hervorgegangenen Polymerisate werden für die weiter unten beschriebenen Versuche verwendet.

### Vergleichsversuche C, D, E und Beispiel 2

Es wird wiederum die weiter oben beschriebene Apparatur verwendet und in den Polymerisationskessel eingetragen:
77 l/h einer wäßrigen Lösung, die enthält, jeweils bezogen auf die Lösung:
0,89 Gew.-% Natriumsalz eines C₁₂ bis C₁₄-Alkansulfats,
0,82 Gew.-% Natriumsalz eines C₁₂ bis C₁₇-Alkansulfonats und
0,015 Gew.-% Natriumhydrogensulfit.

Die wäßrige Lösung enthält ferner:
- für Vergleichsversuch C
   0,10 Gew.-% Natriumhydrogencarbonat
- für Vergleichsversuch D
   0,05 Gew.-% primäres Natriumphosphat und
   0,05 Gew.-% sekundäres Natriumphosphat
- für Vergleichsversuch E
   0,02 Gew.-% Trinatriumphosphat
- für Beispiel 2
   0,02 Gew.-% Natron-Wasserglas.

Ferner werden eingetragen:
70 l/h monomeres Vinylchlorid und
2 l/h einer 2gew.%igen wäßrigen Lösung von Kaliumpersulfat.

Die Temperatur im Polymerisationskessel beträgt 46 °C. Die aus dem Kessel ausgetragene Polymerisatdispersion hat einen Feststoffgehalt von circa 43 Gew.-%. Der Umsatz an monomerem Vinylchlorid beträgt 90 %.

Die Dispersionen werden weiterbehandelt, wie unter Vergleichsversuch A und B und Beispiel 1 beschrieben, wobei nach der 4stündigen Vakuumbehandlung den Dispersionen zugesetzt werden, jeweils bezogen auf Polymeres:
- der Dispersion für Vergleichsversuch C
   0,2 Gew.-% Natriumcarbonat
- der Dispersion für Vergleichsversuch D
   0,05 Gew.-% primäres Natriumphosphat und
   0,05 Gew.-% sekundäres Natriumphosphat
- der Dispersion für Vergleichsversuch E
   0,2 Gew.-% Trinatriumphosphat
- der Dispersion für Beispiel 2
   0,2 Gew.-% Natron-Wasserglas.

Die Trocknung erfolgt wie bei Vergleichsversuch A und B und Beispiel 1 beschrieben. Das trockene Emulsionspolymerisat hat einen K-Wert von 74.

Die Polymerisate aus den Vergleichsversuchen A bis E und den Beispielen 1 bis 2 werden wie folgt weiterverarbeitet:

Zunächst wird das Polymerisat bei 20 °C über einer gesättigten Salzlösung konditioniert.
100,0 Gew.-Teile des jeweiligen Emulsionsvinylchlorid-Polymerisates,
84,2 Gew.-Teile Di-2-ethylhexylphthalat,
2,2 Gew.-Teile Azodicarbonamid und
2,2 Gew.-Teile Barium/Zink-Stabilisator (®Sicostab M 67 der BASF AG) als "Kicker" und Thermostabilisator
werden nach üblichen Verfahren zu einer Paste gemischt und mittels einer Walzenrakel in einer Dicke von 2 mm auf ein "Release"-Papier beschichtet und bei einer Temperatur von 190 °C in einem Mathis-Ofen geliert und expandiert (Ofen der Firma Werner Mathis AG, Niederhasli bei Zürich, Schweiz). Nach 1 Minute Verweilzeit im Ofen und anschließend nach je 30 Sekunden weiterer Verweilzeit im Ofen wird die Dicke der expandierten Pastenschicht gemessen. Die Meßwerte, in Millimetern in Abhängigkeit von der Verweilzeit im Ofen, sind in nachfolgender Tabelle angegeben. Zu vergleichen sind die Versuche A und B mit Beispiel 1 und die Versuche C bis E mit Beispiel 2.

**Tabelle**

| V/B | T °C | K | E Gew.-% | S Gew.-% | KS Gew.-% | Schaumdicke in mm nach | | | | | |
|---|---|---|---|---|---|---|---|---|---|---|---|
| | | | | | | 1 min | 1,5 min | 2 min | 2,5 min | 3 min | 3,5 min |
| A | 50 | 69 | 1,91 | 0,52 | --- | 2,0 | 3,2 | 4,2 | 5,2 | 5,9 | 6,5 |
| B | 50 | 69 | 1,91 | 0,32 | --- | 2,0 | 3,1 | 4,1 | 5,0 | 5,7 | 6,3 |
| 1 | 50 | 69 | 1,91 | 0,32 | 0,23 | 2,0 | 3,3 | 4,8 | 6,2 | 6,8 | 7,0 |
| C | 46 | 74 | 2,27 | 0,42 | --- | 2,1 | 2,3 | 2,5 | 2,7 | 4,1 | 5,4 |
| D | 46 | 74 | 2,27 | 0,32 | --- | 2,0 | 2,1 | 2,8 | 3,7 | 4,6 | 5,5 |
| E | 46 | 74 | 2,27 | 0,32 | --- | 2,0 | 3,1 | 4,5 | 5,6 | 6,2 | 7,0 |
| 2 | 46 | 74 | 2,27 | 0,32 | 0,23 | 2,1 | 2,7 | 5,2 | 6,5 | 7,6 | 7,9 |
| In der Tabelle bedeuten: V/B = Vergleichsversuch (Buchstabe) oder Beispiel (Ziffer) T = Polymerisationstemperatur K = K-Wert des Polymeren E = Emulgatorgehalt des Polymeren S = Gehalt des Polymeren an anorganischen Salzen einschließlich KS KS = Gehalt des Polymeren an Kieselsäure beziehungsweise kieselsaurem Salz | | | | | | | | | | | |

Alle Gewichtsprozent-Angaben beziehen sich auf das Vinylchloridpolymere.

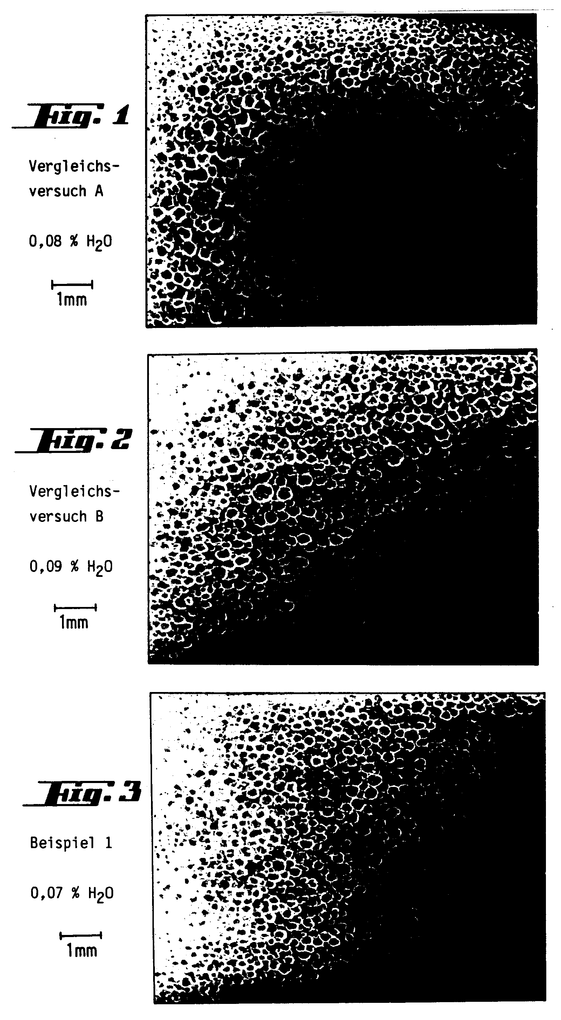

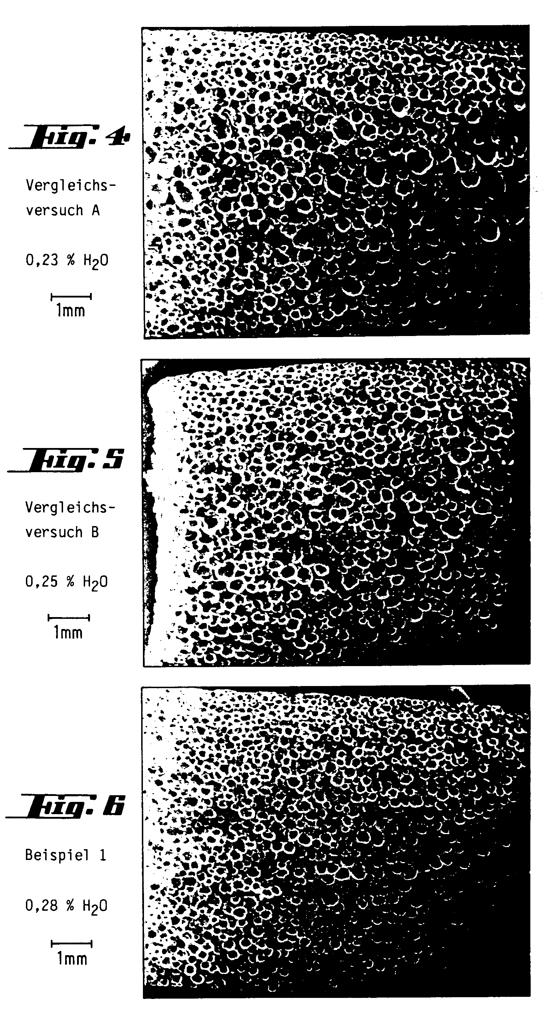

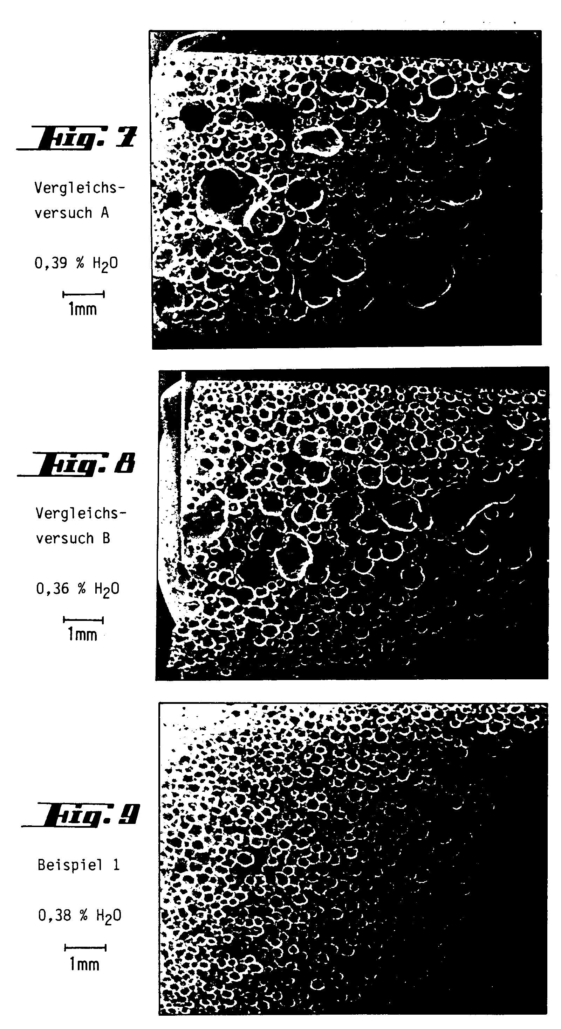

Zur Bestimmung der Schaumstruktur in Abhängigkeit von der Restfeuchte im Polymeren wird wie folgt verfahren:
Die wie oben beschrieben hergestellten trockenen Polymerisate werden in einem abgeschlossenen Raum über einer gesättigten Kaliumchloridlösung bei 20 °C konditioniert und ihr Feuchtegehalt mittels Titration nach Karl Fischer bestimmt. Wenn sich der Feuchtegehalt eines Polymerisates nicht mehr ändert, wird eine Probe davon entnommen und in einem zweiten geschlossenen Raum über Phosphorpentoxid gelagert und der nun abnehmende Feuchtegehalt vermittels Karl-Fischer-Titration verfolgt. Wenn der gewünschte Feuchtegrad erreicht ist, wird das Polymere entnommen und nach dem oben beschriebenen Rezept nach üblicher Methode eine Paste hergestellt, mittels einer Walzenrakel in einer Dicke von 2 mm auf ein "Release"-Papier beschichtet und bei einer Temperatur von 190 °C im Mathis-Ofen während 4 Minuten geliert und expandiert. Die so erhaltenen festen Polymerschäume werden senkrecht zu ihrer größten Fläche aufgeschnitten, die Schnittstelle im Rasterelektronen-Mikroskop untersucht und fotografiert. Hierbei werden die Bilder gemäß Fig. 1 bis Fig. 9 erhalten. Wie ersichtlich, zeigen die nach Beispiel 1 hergestellten Vinylchloridpolymerisate bei steigendem Feuchtigkeitsgehalt eine wesentlich gleichmäßigere Schaumstruktur als die nach den Vergleichsversuchen A und B erzeugten Polymerisate.

## Patentansprüche

1. Verfahren zur Herstellung eines Vinylchloridpolymerisates durch Polymerisation in wäßriger Emulsion, dadurch gekennzeichnet, daß im Zeitraum von vor Beginn der Polymerisation bis vor dem Beginn der Trocknung dem Polymerisationsansatz 0,01 bis 2,0 Gew.-%, bezogen auf Monomer(e), wasserlösliche Kieselsäure und/oder ein wasserlösliches Salz einer Kieselsäure zugegeben werden, wobei "wasserlöslich" heißt, daß in 100 g Wasser bei 20°C mindestens 1 g der wasserfreien Kieselsäure beziehungsweise deren Salz kolloidal oder molekular löslich ist.

2. Verfahren nach Anspruch 1, dadurch gekennzeichnet, daß 0,011 bis 0,8 Gew.-%, bezogen auf eingesetzte Monomere, wasserlösliche Kieselsäure und/oder mindestens ein wasserlösliches Salz einer Kieselsäure, vorzugsweise Natrium- oder Kalium-Metasilicat oder Natron- oder Kali-Wasserglas, zugegeben werden.

3. Verfahren nach Anspruch 1 oder 2, dadurch gekennzeichnet, daß ein Teil der Kieselsäure und/oder des Salzes einer Kieselsäure vor Beginn oder während der Polymerisation und der Rest der zuzugebenden Gesamtmenge nach der Polymerisation der Polymerisatdispersion zugegeben werden.

4. Verfahren nach einem oder mehreren der Ansprüche 1 bis 3, dadurch gekennzeichnet, daß eine Mischung von Vinylchlorid und 0,1 bis 30 Gew.-%, bezogen auf die Mischung, von mindestens einem Monomeren, das mit Vinylchlorid copolymerisierbar ist, oder eine Mischung von Vinylchlorid und 0,2 bis 10 Gew.-%, bezogen auf die Mischung, von mindestens einem Polymeren, das mit Vinylchlorid pfropfpolymerisierbar ist, eingesetzt wird.

5. Verfahren nach einem oder mehreren der Ansprüche 1 bis 4, dadurch gekennzeichnet, daß die Emulsionspolymerisation bei 10 bis 90 °C, Vorzugsweise 30 bis 75 °C, durchgeführt wird.

6. Verfahren nach einem oder mehreren der Ansprüche 1 bis 5, dadurch gekennzeichnet, daß für die Emulsionspolymerisation mindestens ein Emulgator eingesetzt wird, der ausgewählt ist aus den Natrium- oder Kaliumsalzen der Alkylsulfonsäuren mit 8 bis 18 C-Atomen, Alkylsulfate mit 8 bis 18 C-Atomen, Sulfobernsteinsäuremono- oder -diester mit aliphatischen Alkoholen, die 8 bis 12 C-Atome enthalten.

7. Formmasse, die enthält
a₁) 50 bis 100 Gew.-Teile eines Vinylchloridpolymeren, das in wäßriger Emulsion nach einem oder mehreren der Ansprüche 1 bis 6 polymerisiert wurde und 0,0105 bis 2,7 Gew.-%, bezogen auf das Polymere, wasserlösliche Kieselsäure und/oder mindestens ein wasserlösliches Salz einer Kieselsäure enthält,
a₂) 0 bis 50 Gew.-Teile eines durch Polymerisation in wäßriger Suspension hergestellten Vinylchloridpolymeren, das eine mittlere Teilchengröße von 20 bis 60 »m aufweist, mit der Maßgabe, daß a₁) und a₂) zusammen 100 Gew.-Teile sind,
b) 30 bis 130 Gew.-Teile mindestens eines Weichmachers,
c) 0,1 bis 15 Gew.-Teile von mindestens einem chemisch zersetzlichen Treibmittel, das mindestens 2 N-Atome im Molekül enthält,
d₁) 0 bis 10 Gew.-Teile mindestens einer als "Kicker" wirksamen Verbindung, die die Zersetzungstemperatur des Treibmittels herabsetzt, und
d₂) 0 bis 10 Gew.-Teile eines für Vinylchloridpolymerisate geeigneten Thermostabilisators, mit der Maßgabe, daß d₁) und d₂) zusammen mindestens 0,2 Gew.-Teile sind.

8. Formmasse nach Anspruch 7, dadurch gekennzeichnet, daß der Weichmacher ein Ester der Phosphorsäure, Trimellithsäure, einer Phthalsäure, einer Alkylsulfonsäure oder einer aliphatischen Di- oder Tricarbonsäure mit einwertigen Alkoholen oder einwertigen Phenolen, die 4 bis 13 C-Atome enthalten, ein Chlorparaffin, ein Epoxidgruppen enthaltendes Carbonsäuretriglycerid oder ein oligomerer Polyesterweichmacher ist.

9. Formmasse nach Anspruch 7, die als Komponente b) 40 bis 120 Gew.-Teile mindestens eines Weichmachers und/oder als Komponente c) 0,5 bis 5 Gew.-Teile mindestens eines chemisch zersetzlichen Treibmittels und/oder mindestens 0,5 Gew.-Teile Gesamtmenge der Komponenten d₁) und d₂) enthält.

10. Verwendung eines Vinylchloridpolymerisates, das nach einem oder mehreren der Ansprüche 1 bis 6 hergestellt wurde, zur Produktion von Formteilen aus einem festen Polymerschaum, der im Polymeranteil überwiegend polymerisierte Einheiten des Vinylchlorids enthält.

## Claims

1. Process for the preparation of a vinyl chloride polymer by polymerization in aqueous emulsion, characterized in that 0.01 to 2.0% by weight, based on the monomer(s), of water-soluble silicic acid and/or a water-soluble salt of a silicic acid are added to the polymerization mixture in the period from before the start of the polymerization to before the start of drying, "water-soluble" meaning that at least 1 g of the anhydrous silicic acid or salt thereof is colloidally or molecularly soluble in 100 g of water at 20°C.

2. Process according to Claim 1, characterized in that 0.011 to 0.8% by weight, based on the monomers employed, of water-soluble silicic acid and/or at least one water-soluble salt of a silicic acid, preferably sodium metasilicate or potassium metasilicate or soda waterglass or potash waterglass, is added.

3. Process according to Claim 1 or 2, characterized in that some of the silicic acid and/or of the salt of a silicic acid is added before the start of or during the polymerization and the remainder of the total amount to be added is added to the polymer dispersion after the polymerization.

4. Process according to one or more of Claims 1 to 3, characterized in that a mixture of vinyl chloride and 0.1 to 30% by weight, based on the mixture, of at least one monomer which can be copolymerized with vinyl chloride, or a mixture of vinyl chloride and 0.2 to 10% by weight, based on the mixture, of at least one polymer which can undergo grafting polymerization with vinyl chloride, is employed.

5. Process according to one or more of Claims 1 to 4, characterized in that the emulsion polymerization is carried out at 10 to 90°C, preferably 30 to 75°C.

6. Process according to one or more of Claims 1 to 5, characterized in that at least one emulsifier chosen from the sodium or potassium salts of alkylsulphonic acids having 8 to 18 C atoms, alkyl sulphates having 8 to 18 C atoms and sulphosuccinic acid mono- or diesters with aliphatic alcohols which contain 8 to 12 C atoms is employed for the emulsion polymerization.

7. Moulding composition which comprises
a₁) 50 to 100 parts by weight of a vinyl chloride polymer which has been polymerized in aqueous emulsion according to one or more of Claims 1 to 6 and comprises 0.0105 to 2.7% by weight, based on the polymer, of water-soluble silicic acid and/or at least one water-soluble salt of a silicic acid,
a₂) 0 to 50 parts by weight of a vinyl chloride polymer prepared by polymerization in aqueous suspension and having an average particle size of 20 to 60 »m, with the proviso that a₁) and a₂) together are 100 parts by weight,
b) 30 to 130 parts by weight of at least one plasticizer,
c) 0.1 to 15 parts by weight of at least one chemically decomposable blowing agent which contains at least 2 N atoms in the molecule,
d₁) 0 to 10 parts by weight of at least one compound which acts as a "kicker" and reduces the decomposition temperature of the blowing agent and
d₂) 0 to 10 parts by weight of a heat stabilizer suitable for vinyl chloride polymers, with the proviso that d₁) and d₂) together are at least 0.2 part by weight.

8. Moulding composition according to Claim 7, characterized in that the plasticizer is an ester of phosphoric acid, trimellitic acid, a phthalic acid, an alkylsulphonic acid or an aliphatic di- or tricarboxylic acid with monohydric alcohols or monohydric phenols which contain 4 to 13 C atoms, a chloroparaffin, a carboxylic acid triglyceride containing epoxide groups or an oligomeric polyester plasticizer.

9. Moulding composition according to Claim 7, which comprises 40 to 120 parts by weight of at least one plasticizer as component b) and/or 0.5 to 5 parts by weight of at least one chemically decomposable blowing agent as component c) and/or at least 0.5 part by weight in total of components d₁) and d₂).

10. Use of a vinyl chloride polymer which has been prepared according to one or more of Claims 1 to 6 for the production of mouldings of a solid polymer foam which comprises chiefly polymerized units of vinyl chloride in the polymer content.

## Revendications

1. Procédé de préparation d'un polymérisat de chlorure de vinyle par polymérisation en émulsion aqueuse, caractérisé en ce que, dans l'intervalle de temps allant d'avant le début de la polymérisation jusqu' avant le début du séchage, on ajoute au mélange initial de polymérisation de 0,01 à 2, 0 % en poids, par rapport au(x) monomère(s), d'acides siliciques hydrosolubles et/ou d'un sel hydrosoluble d'un acide silicique, le terme "hydrosoluble" significant que 1 g d'acides siliciques exempts d'eau, respectivement de leurs sels, au moins est soluble de manière colloïdale ou de manière moléculaire dans 100 g d'eau à 20° C.

2. Procédé selon la revendication 1, caractérisé en ce que l'on ajoute de 0,011 à 0,8 % en poids, par rapport aux monomères utilisés, d'acides siliciques hydrosolubles et/ou au moins d'un sel hydrosoluble d'un acide silicique, de préférence un métasilicate de sodium ou de potassium ou un verre soluble de sodium ou de potassium.

3. Procédé selon la revendication 1 ou 2, caractérisé en ce que l'on ajoute une partie de l'acide silicique et/ou du sel d'un acide silicique avant le début ou pendant la polymérisation et que l'on ajoute le reste de la quantité totale à ajouter après la polymérisation de la dispersion de polymérisat.

4. Procédé selon une ou plusieurs des revendications 1 à 3, caractérisé en ce que l'on utilise un mélange de chlorure de vinyle et de 0,1 à 30 % en poids, par rapport au mélange, d'au moins un monomère, qui est copolymérisable avec le chlorure de vinyle, ou un mélange de chlorure de vinyle et de 0,2 à 10 % en poids, par rapport au mélange, d'au moins un polymère, qui est polymérisable par greffage avec le chlorure de vinyle.

5. Procédé selon une ou plusieurs des revendications 1 à 4, caractérisé en ce que l'on effectue la polymérisation en émulsion à une température de 10 à 90° C, de préférence de 30 à 75° C.

6. Procédé selon une ou plusieurs des revendications 1 à 5, caractérisé en ce que l'on utilise pour la polymérisation en émulsion au moins un agent émulsifiant, qui est choisi parmi les sels de sodium ou de potassium des acides alkylsulfoniques ayant de 8 à 18 atomes de C, les sulfates alkyles ayant de 8 à 18 atomes de C, les monoesters ou diesters de l'acide sulfosuccinique avec des alcools aliphatiques, qui contiennent de 8 à 12 atomes de C.

7. Mélange à mouler, qui contient
a₁) de 50 à 100 parts en poids d'un polymère de chlorure de vinyle, qui a été polymérisé en émulsion aqueuse selon une ou plusieurs des revendications 1 à 6 et qui contient de 0,0105 à 2,7 % en poids, par rapport au polymère, des acides siliciques hydrosolubles et/ou au moins un sel hydrosoluble d'un acide silicique,
a₂) de 0 à 50 parts en poids d'un polymère de chlorure de vinyle préparé par polymérisation en suspension aqueuse, qui présente une grandeur moyenne de particules de 20 à 60 microns, avec le proviso que a₁) et a₂) forment ensemble 100 parts en poids,
b) de 30 à 130 parts en poids d'au moins un plastifiant,
c) de 0,1 à 15 parts en poids d'au moins un agent gonflant décomposable chimiquement, qui contient au moins 2 atomes de N dans la molécule,
d₁) de 0 à 10 parts en poids d'au moins un composé actif en tant qu'agent de démarrage, qui abaisse la température de décomposition de l'agent gonflant, et
d₂) de 0 à 10 parts en poids d'un agent de stabilisation thermique approprié au polymérisat de chlorure de vinyle, avec le proviso que d₁) et d₂) font ensemble au moins 0,2 part en poids.

8. Mélange à mouler selon la revendication 7, caractérisé en ce que le plastifiant est un ester de l'acide phosphorique, de l'acide trimellitique, d'un acide phtalique, d'un acide alkylsulfonique ou d'un acide dicarboxylique ou tricarboxylique aliphatique avec des alcools monofonctionnels ou des phénols monofonctionnels, qui contiennent de 4 à 13 atomes de C, une paraffine chlorée, un glycéride d'acide carboxylique contenant des groupements époxydiques ou un plastifiant de polyester oligomère.

9. Mélange à mouler selon la revendication 7, caractérisé en ce qu'il contient en tant que composant b) de 40 à 120 parts en poids d'au moins un plastifiant et/ou en tant que composant c) de 0,5 à 5 parts en poids d'au moins un agent gonflant décomposable chimiquement et/ou d'au moins 0,5 part en poids en quantité totale des composants d₁) et d₂).

10. Utilisation d'un polymérisat de chlorure de vinyle, qui a été préparé selon une ou plusieurs des revendications 1 à 6, en vue de la production de pièces de forme à partir d'une mousse polymère solide qui contient dans la partie polymère de manière prépondérante des unités polymérisées de chlorure de vinyle.
